# EUROPÄISCHE PATENTSCHRIFT

(11) **EP 1 117 208 B1**
(45) Veröffentlichungstag und Bekanntmachung des Hinweises auf die Patenterteilung: **06.04.2005**
(21) Anmeldenummer: 00126711.1
(22) Anmeldetag: 05.12.2000
(51) Int. Cl.: H04L 12/14

(54) **Verfahren zur Vergebührung von Telekommunikations- und Datendiensten**
Method for billing telecommunication and data services
Procédé pour la taxation de services de télécommunication et de données

(30) Priorität: 12.01.2000 DE 10000943
(43) Veröffentlichungstag der Anmeldung: 18.07.2001
(73) Patentinhaber: SIEMENS AKTIENGESELLSCHAFT, 80333 München (DE)
(72) Erfinder: Frank, Michael, Dr., 81371 München (DE)

(56) Entgegenhaltungen:
- KORNER E ET AL: "Efficient brokerage in a CORBA-based service mediation platform" AUTONOMOUS DECENTRALIZED SYSTEMS, 1999. INTEGRATION OF HETEROGENEOUS SYSTEMS. PROCEEDINGS. THE FOURTH INTERNATIONAL SYMPOSIUM ON TOKYO, JAPAN 21-23 MARCH 1999, LOS ALAMITOS, CA, USA,IEEE COMPUT. SOC, US, 21. März 1999 (1999-03-21), Seiten 284-291, XP010376987 ISBN: 0-7695-0137-0
- HOL K: "BIT BY BID BY BIT DEMAND AND SUPPLY OF BANDWIDTH THROUGH ELECTRONIC AUCTIONS" 38TH EUROPEAN TELECOMUNICATIONS CONGRESS. PROCEEDINGS NETWORKING THE FUTURE. UTRECHT, NL, AUG. 24 - 28, 1999, LONDON: IBTE, GB, 24. August 1999 (1999-08-24), Seiten 143-147, XP000847185
- ARNOLD K: "The Jini architecture: dynamic services in a flexible network" DESIGN AUTOMATION CONFERENCE, 1999. PROCEEDINGS. 36TH NEW ORLEANS, LA, USA 21-25 JUNE 1999, PISCATAWAY, NJ, USA,IEEE, US, 21. Juni 1999 (1999-06-21), Seiten 157-162, XP010344000 ISBN: 1-58113-092-9
- "JINI ARCHITECTURAL OVERVIEW" SUN MICROSYSTEMS TECHNICAL WHITE PAPER, 1999, XP002217546
- UBEROI A: "Billing-Konzepte für neue Dienste" FUNKSCHAU, Nr. 19, 1999, Seiten 24-26, XP001145772 ISSN: 0016-2841
- PIEMONT C: "GEISTREICHE VERBINDUNGEN INTELLIGENTE GERAETE IN DEZENTRALEN NETZEN" CT MAGAZIN FUER COMPUTER TECHNIK, VERLAG HEINZ HEISE GMBH., HANNOVER, DE, Nr. 20, 1998, Seiten 198-202, XP001106236 ISSN: 0724-8679

## Beschreibung

### Fachgebiet der Erfindung

Die Betreiber von Telekommunikations- und Datennetzen sind in der Regel bestrebt, für die von ihnen angebotene Infrastruktur und Dienste von den jeweiligen benutzenden Teilnehmern eine angemessene Benutzungsgebühr zu verlangen.
In herkömmlichen Netzen, wie dem Telefonnetz, war die Gebührenabrechnung verhältnismäßig einfach. Alle Dienste waren in den Vermittlungsanlagen realisiert, der Gebührenberechnung lagen Daten zugrunde, die zentral ermittelt und verwaltet wurden.
Der nächste Schritt führte weg von Monopolanbietern wie der Deutschen Bundespost hin zu verteilten Anwendungen. Eine Lösung für das Vergebührungsproblem bietet hier das sogenannte Intelligente Netz IN (nach den Telekommunikationsnormen ITU-T Q.1200 ff.) Das IN vereinheitlicht die "Sprache" aller Geräte der unterschiedlichen Dienstanbieter (und verschiedener Hersteller) auf Basis gemeinsamer Protokolle wie dem Zentralkanalsignalisierungssystem Nr. 7 oder INAP. Die Aufzeichnung der Gebührendaten wird über sogenannte Call Data Records CDR gesteuert, die an verschiedenen Stellen im Netz entstehen und dann in AMA (Automatic Message Accounting) Tickets zu Sammelstellen (im Mobilfunknetz beispielsweise dem Heimatregister HLR) gesendet werden.
Die neuen IP-Netze arbeiten vollkommen dezentral und können mit den bisherigen Billing-Mechanismen nicht mehr erfaßt werden. Die Zugangsanbieter (ISP, Internet Service Provider) gehen daher oft einen einfachen Weg: sie vergebühren über Zugangspauschalen oder überlassen die Vergebührung den Telefongesellschaften, die eine herkömmliche Gebührenermittlung über die Einwahl des Teilnehmers zum ISP über ihre Netze durchführen.
Weiter erschwert wird die Gebührenermittlung, wenn verschiedene Telekommunikationsnetze über neue datenzentrierte Dienste wie IP-Telefonie, Videokonferenz oder Web-Hosting miteinander kombiniert werden.

### Stand der Technik

Der Artikel "Efficient brokerage in a CORBA-based service mediation platform" von Eckhart Körner et al, veröffentlicht in IEEE Computer Soc., März 1999 wird ein Verfahren zur Vergebührung von Diensten (beispielsweise das Anbieten von Filmen zum Herunterladen auf das Endgerät eines Dienstnehmers) beschrieben. Über einen so genannten Mediator wird eine Vereinbarung zwischen Dienstnehmer und Dienstgeber getroffen, so dass die Informationen über die Benutzungsgebühr einerseits als auch die Verrechnung der Gebühren andererseits durch diesen Mediator angeboten wird. Problematisch kann hier sein, dass nach Starten eines Dienstes eine Dauerbelegung durch den Dienstenutzer möglich ist.

In dem Artikel "Billing Konzepte für neue Dienste" wird dieses Problem erläutert und als Lösung eine sogenannte IP-Mediation-Software beschrieben. Diese fungiert als Schnittstelle zwischen den Netzelementen der IP-Netze und den vorhandenen "Customer Care and Billing" Zentren. In der Arbeitsweise entspricht diese Software dem Konzept der Intelligenten Netze IN. In einer Vielzahl von Netzelementen werden Echtzeitinformationen für eine verbrauchsabhängige Abrechnung, durch Beobachten und Erfassen aussagekräftiger Daten, gesammelt. Die Software kann für verschiedene Netzwerk-Geräte entwickelt werden. Die erzeugten Informationen (Service Detail Records, SDR) werden dann zusammengefaßt, und auch gefiltert.
Dieses Verfahren ist aufwendig, da im Netz die Software-Agenten zur Informations-Sammlung für die verschiedenen Gerätetypen entwickelt und installiert werden müssen. Die erzeugte Informationsflut ist hoch, nicht benötigte und redundante Informationen müssen ständig herausgefiltert werden um Kapazitätsengpässe zu vermeiden. Die Datenintegrität muß überwacht werden, intelligente Algorithmen zum Aufspüren und Löschen von redundanten Daten sind notwendig, um die Effizienz des Datenspeichers zu erhalten.

Aufgabe der Erfindung ist es, ein Verfahren für die Gebührenermittlung in Telekommunikations- und Datennetzen anzugeben, das einfach durchzuführen ist und die oben genannten Probleme vermeidet.

### Darstellung der Erfindung

Diese Aufgabe wird gelöst durch ein Verfahren gemäß Patentanspruch 1.
Angewendet wird ein Mietmechanismus zwischen dem Dienstenehmer und dem Dienstegeber, in dem der Dienstenehmer vor der Benutzung des Dienstes die Dauer der Benutzung und insbesondere die Höhe der dafür zu verrechnenden Gebühren mit dem Dienstegeber vereinbart.
Dieser Mechanismus ist sehr einfach zu realisieren und bietet so eine stabile Grundlage für die Vergebührung. Die Gebührendaten sind einfach zu ermitteln, die Höhe der Gebühren kann auch angepaßt werden, beispielsweise an die aktuelle Auslastung des Dienstes. Das Telekommunikationssystem kann jederzeit um Netze oder Netzelemente erweitert bzw. diese können auch ohne großen Aufwand aus dem Netz wieder entfernt werden.

Nach Ablauf der vereinbarten Benutzungsdauer wird der Dienst automatisch freigegeben. Dienste können so nicht dauerbelegt werden, sei es aus Absicht oder auch versehentlich.
Der Benutzungsbetrag und/oder die Benutzungsdauer können vor Beginn der Benutzung des Dienstes "beantragt" werden, d. h. der Dienstnehmer teilt dem Dienstgeber den Betrag mit, welchen er bereit ist, für die Benutzung zu bezahlen. Der Dienstgeber kann dieses nun akzeptieren, er kann aber auch einen Alternativwert zurücksenden (beispielsweise niedrigerer Tarif bei längerer Benutzung, kürzere Benutzungsdauer bei höherer Auslastungsrate etc.)
Sollte die vereinbarte Benutzungsdauer oder der vereinbarte Benutzungsbetrag sich während der Benutzungszeit als zu kurz herausstellen, kann der Dienstnehmer eine Verlängerung beantragen. Damit wird verhindert, daß das Konzept zu starr ist und der Dienstnehmer den Dienst erneut beantragen muß, mit dem möglichen Risiko, keinen Zugriff mehr auf den Dienst zu bekommen.
Wenn der Dienstgeber aus einem Grund dem Dienstnehmer den Dienst nicht mehr zur Verfügung stellen kann, obwohl die vereinbarte Miete noch nicht abgelaufen ist, so hat der Dienstgeber auch die Möglichkeit, das Mietverhältnis vorzeitig zu beenden.
In einer vorteilhaften Ausgestaltungsform der Erfindung bietet eine zentrale Instanz (ein Blackboard) dem Dienstnehmer Informationen über die zur Verfügung stehenden Dienste und koordiniert auch den Zugriff auf die Dienste und fungiert als Gateway.
Der erfindungsgemäße Mechanismus ist insbesondere von Vorteil in sogenannten Ad-Hoc Netzen. Eine Beschreibung dieses neuartigen Netztyps, der in der Zukunft sicher an Bedeutung gewinnen wird, findet sich beispielsweise in dem Artikel "Geistreiche Verbindungen, Intelligente Geräte in dezentralen Netzen". Er zeichnen sich dadurch aus, daß Netzelemente, und damit auch von ihnen angebotene Dienste, beliebig in ein Netz eingefügt und wieder aus diesem entfernt werden können. Die zentrale Steuerung wird durch sogenannte schwarze Bretter (Blackboards) übernommen. Netzelemente können dem schwarzen Brett ihre Existenz und ihre Fähigkeiten mitteilen (Join).
Im folgenden werden als Beispiel die Juni™ Mechanismen der Firma Sun Microsystems beschrieben. Dies soll jedoch keine Einschränkung für die erfindungsgemäßen Mechanismen darstellen, da auch HP (jetSend), Lucent (Inferno) oder auch Microsoft (UPnP) ähnliche Systeme entwickeln.

### Kurzbeschreibung der Zeichungen

Im folgenden wird die Erfindung anhand von Ausführungsbeispielen erläutert. Dabei zeigen
- Figur 1: einen schematischen Aufbau eines beispielhaften Netzes, in dem das erfindungsgemäße Verfahren angewendet wird,
- Figur 2: ein Ablaufdiagramm zur Nutzung eines Dienstes, und
- Figur 3: den Dialog zwischen Dienstnutzer und Diensterbringer nach den Lease-Prinzipien von JINI™.

### Beschreibung der bevorzugten Ausgestaltungsformen

Jini™ enthält den vorgestellten Mietmechanismus (Leasing) bereits teilweise. Die Verwaltung von Resourcen remote genutzter Dienst über Blackboards zu steuern. Eine Beschreibung dieses Mechanismus findet sich in der "Jini™ Distributed Leasing Specification".
Da Jini™ und das zugrundeliegende Java ursprünglich ausschließlich für die Verwendung im Internet bestimmt waren, wurde bei den dort beschriebenen Konzepten der Gesichtspunkt der Vergebührung von Diensten nicht berücksichtigt. Das erfindungsgemäße Verfahren beinhaltet somit die Lösung für zwei Probleme:
- Vergebührung von Internet-Diensten an sich und
- neues Vergebührungskonzept bei verteilten Kommunikationsnetzen mit inkompatiblen Schnittstellen.

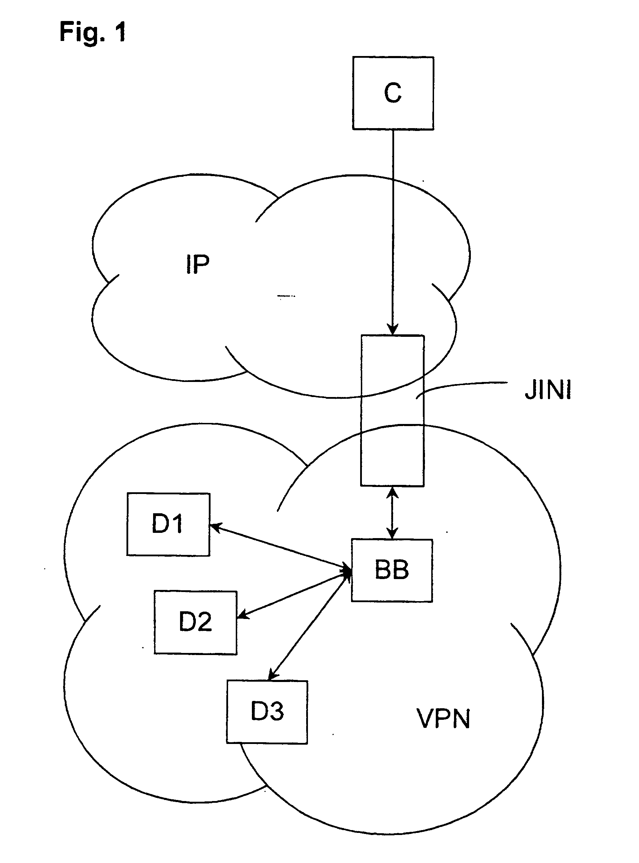

Figur 1 stellt nun ein beispielhaftes Szenario der Erfindung vor. Ein Dienstnehmer C möchte über ein erstes Kommunikationsnetz IP einen anderen Dienst von einem Diensterbringer D1, D2, D3 nutzen. Dieser Diensterbringer befindet sich in einem zweiten Kommunikationsnetz VPN. Der Zugriff auf die Dienste geschieht über ein Blackboard BB, mit einem Gateway JINI zwischen den Netzen, welches die Interfaces zu den Diensten enthalten und nun zusätzlich als Gebührenzähler fungiert. Dies in dem Gebührenzähler gesammelten Gebühreninformationen können dann beliebig weiter verarbeitet werden, beispielsweise wie in der Einleitung beschrieben als Call Data Records in AMA-Tickets verpackt und an ein herkömmliches Billing-Center gesendet werden.
Die Dienste werden als Jini-Dienste angeboten. Jini™ bietet ein Transportsystem von Bedienoberflächen (Interfaces), so daß das erfindungsgemäße Vorgehen keine Einschränkung bedeutet gegenüber den herkömmlichen zuvor verwendeten Internet-Diensten.
Da die Lösung auf der logischen Ebene des Ad-Hoc Netzes geschieht, können die Dienste aus Sicht der Transportschicht (beispielsweise TCP) auf völlig unterschiedlichen Plattformen im Netz verteilt sein.

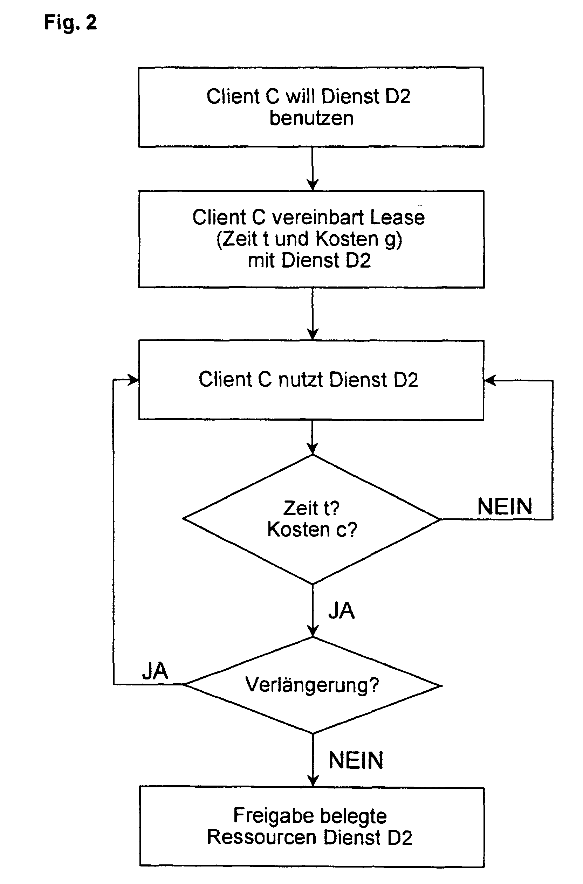

Figur 2 ist ein Ablaufdiagramm des erfindungsgemäßen Verfahrens. Ein Dienst C (entsprechend zu Figur 1) will einen anderen Dienst D2 nutzen. Hierzu wird ein "Lease" zwischen C und D2 vereinbart, dabei wird eine Nutzungsgebühr g und wahlweise noch eine Nutzungsdauer t vereinbart. Nachdem eine Vereinbarung getroffen wurde, nutzt C den Dienst D2. Nach Ablauf der Gebühr und/oder der Zeit werden die Ressourcen von D2 wieder freigegeben. Hat C eine Verlängerung beantragt und wurde ihm diese Verlängerung zugestanden, so kann er den Dienst D2 weiter nutzen. Anderenfalls ist seine Nutzung des Dienstes D2 beendet, die Ressourcen von D2 sind wieder freigegeben. (Die Benutzung eines Dienstes durch einen Dienstnehmer bedeutet in den beschriebenen Fällen jedoch nie die ausschließliche Benutzung).

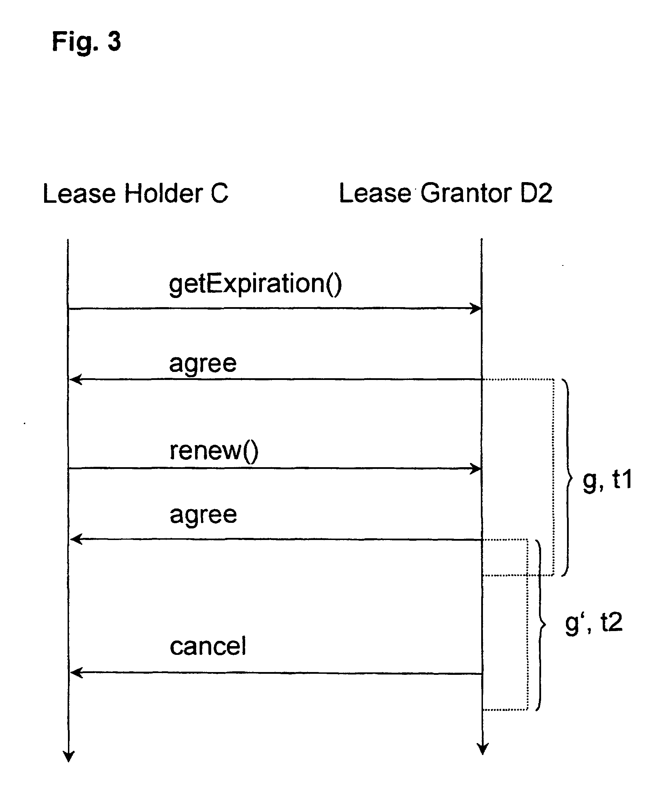

Figur 3 stellt die Kommunikation zwischen dem Dienstenehmer oder Lease Holder C und dem Diensterbringer oder Lease Grantor D2 dar. Die in der "Jini™ Distributed Leasing Specification" beschriebenen Befehle werden hier dargestellt. Zuerst beantragt C einen Lease durch den Befehl getExpiration(). Die Angabe der gewünschten / benötigten Zeit kann auf verschiedene Arten angegeben werden. Wird ihm der gewünschte Dienst zugänglich, so teilt ihm der Diensterbringer D2 dies mit, agree, weiterhin die dafür berechneten Gebühren g und die zugestandene Zeit t1. Im Gebührenzähler Blackboard werden diese Informationen gesammelt und weiterverwertet. Weder Dienstnehmer noch Diensterbringer müssen weitere Schritte für die Gebührenverrechnung durchführen.
der Dienstnehmer kann während des Zeitraums g, t1 versuchen, seinen Lease zu verlängern, renew(). Wird dies akzeptiert, agree, so kann diesmal die verlangte Gebühr g' von der ersten Gebühr unterschiedlich sein.
Der Diensterbringer hat jedoch auch jederzeit die Möglichkeit, die Dienstnutzung abzubrechen, cancel.

### Abkürzungsverzeichnis

| | |
|---|---|
| BB | BlackBoard |
| C | Client |
| D | Dienst |
| INAP | Intelligent Network Application Part |
| IP | Internet |
| ITU | International Telecommunication Union |
| JINI™ | (Java Intelligent Network Infrastructure) |
| UPnP | Universal Plug and Play |
| VPN | Virtual Private Network |

### Literaturverzeichnis

"Billing-Konzepte für neue Dienste", Anil Uberoi, Funkschau 19/99, Seite 24-26, 03.09.1999
"Geistreiche Verbindungen, Intelligente Geräte in dezentralen Netzen", Claudia Piemont, c't 20/1998, Seite 198 - 202.
"JINI™ Distributed Leasing Specification", SUN Microsystems, Version 1.0.1, November 1999 (beispielsweise zu finden unter http://www.sun.com/jini/)

## Patentansprüche

1. Verfahren zur Vergebührung von Diensten in Telekommunikations- und Datennetzen (IP, VPN), bei dem der Dienstnehmer (C) Informationen über verfügbare Telekommunikationsdienste eines Dienstgebers (D1, D2, D3) von einer zentralen Gatewayinstanz (BB) erhält, und
mindestens einen der verfügbaren Telekommunikationsdienste des Dienstgebers (D2) auswählt, und
vor der Benutzung des Dienstes eine Benutzungsdauer (t1) und eine Benutzungsgebühr mit dem Dienstgeber vereinbart
**dadurch gekennzeichnet, dass**
die Vereinbarung zwischen Dienstnehmer (C) und Dienstgeber (D1, D2, D3) über die zentrale Gatewayinstanz (BB) geführt wird, welche die Informationen über die Benutzungsgebühr verwaltet und für weitere Gebührenverrechnungen zur Verfügung stellt und
der ausgewählte Dienst wieder freigegeben wird
- sobald die vereinbarte Benutzungsdauer (t1) abgelaufen ist, und/oder
- sobald die Benutzung der Gegenwert der vereinbarten Benutzungsgebühr erreicht hat.

2. Verfahren nach Patentanspruch 1,
**dadurch gekennzeichnet, dass**
vor der Benutzung eines Dienstes eine Verhandlung über die Benutzungsgebühr und / oder die Benutzungsdauer (t1) erfolgt.

3. Verfahren nach Patentanspruch 1 oder 2,
**dadurch gekennzeichnet, dass**
während der Benutzung des Dienstes des Dienstgebers (D1, D2, D3) eine Verlängerung (renew) der Benutzungsdauer (t1) durch den Dienstnehmer (C) erfolgen kann.

4. Verfahren nach einem der vorigen Patentansprüche,
**dadurch gekennzeichnet, dass**
die Benutzung des Dienstes (D1, D2, D3) durch den Dienstnehmer (C) vom Dienstgeber (D1, D2, D3) vor dem Ablauf der vereinbarten Benutzungsdauer oder dem Verbrauch der vereinbarten Benutzungsgebühr abgebrochen (cancel) werden kann.

5. Verfahren nach einem der vorigen Patentansprüche,
**dadurch gekennzeichnet, dass**
es sich bei dem Telekommunikationsnetz (IP) um ein TCP/IP Netz handelt und bei den Telekommunikationsdiensten um JINI Dienste.

## Claims

1. Method for charging for services in telecommunication and data networks (IP, VPN), whereby the service user (C) obtains information on available telecommunication services of a service provider (D1, D2, D3) from a central gateway instance (BB), and at least one of the available telecommunication services of the service provider (D2) is selected, and a duration of use (t1) and usage charge are agreed with the service provider before using the service,
**characterised in that**
the agreement between the service user (C) and service provider (D1, D2, D3) takes place via the central gateway instance (BB) that manages the information on the usage charge and makes it available for further charge billing and
the selected service is again released
- immediately the agreed duration of use (t1) has expired and/or
- immediately the usage has reached the value of the agreed usage charge.

2. Method in accordance with Claim 1,
**characterised in that**
the usage charge and/or the duration of use (t1) is negotiated before using a service.

3. Method in accordance with Claim 1 or 2,
**characterised in that**
an extension (renew) of the duration of use (t1) can take place by the service user (C) during the usage of the service of the service provider (D1, D2, D3).

4. Method in accordance with one of the preceding claims,
**characterised in that**
the use of the service (D1, D2, D3) by the service user (C) can be cancelled by the service provider (D1, D2, D3) before the agreed duration of use has elapsed or the agreed usage charge has been used (cancel).

5. Method in accordance with one of the preceding claims,
**characterised in that**
the telecommunication network (IP) is a TCP/IP network and the telecommunication services are JINI services.

## Revendications

1. Procédé pour la taxation de services dans des réseaux de télécommunication et de données (IP, VPN), dans lequel le preneur de service (C) reçoit d'une instance centrale Gateway (BB) des informations concernant des services de télécommunication disponibles d'un fournisseur de service (D1, D2, D3) et sélectionne au moins un des services de télécommunication disponibles du fournisseur de service (D2), et convient avec le fournisseur de service, avant l'utilisation du service, d'une durée d'utilisation (t1) et d'une taxe d'utilisation
**caractérisé en ce que**
l'accord entre le preneur de service (C) et le fournisseur de service (D1, D2, D3) est mené par l'intermédiaire de l'instance centrale Gateway (BB), laquelle gère les informations concernant la taxe d'utilisation et les met à disposition pour d'autres taxations et
**en ce que** le service sélectionné est à nouveau libéré
- dès que la durée d'utilisation convenue (t1) est écoulée, et/ou
- dès que l'utilisation a atteint la valeur correspondante de la taxe d'utilisation convenue.

2. Procédé selon la revendication 1,
**caractérisé en ce que**
une négociation relative à la taxe d'utilisation et / ou à la durée d'utilisation (t1) est réalisée avant l'utilisation d'un service.

3. Procédé selon la revendication 1 ou 2,
**caractérisé en ce que**
pendant l'utilisation du service du fournisseur de service (D1, D2, D3), une prolongation (renew) de la durée d'utilisation (t1) peut être réalisée par le preneur de service (C).

4. Procédé selon l'une quelconque des revendications précédentes,
**caractérisé en ce que**
l'utilisation du service (D1, D2, D3) par le preneur de service (C) peut être interrompue (cancel) par le fournisseur de service (D1, D2, D3) avant l'expiration de la durée d'utilisation convenue ou avant la consommation de la taxe d'utilisation convenue.

5. Procédé selon l'une quelconque des revendications précédentes,
**caractérisé en ce que**
le réseau de télécommunication (IP) est un réseau TCP/IP et **en ce que** les services de télécommunication sont des services JINI.
